Europäisches Patentamt

European Patent Office

Office européen des brevets

(19)

(11) Publication number: **0 078 604**
**A2**

(12)

# EUROPEAN PATENT APPLICATION

(21) Application number: **82304991.1**

(51) Int. Cl.³: **G 02 F 1/13**

(22) Date of filing: **22.09.82**

(30) Priority: **30.10.81 US 316710**

(43) Date of publication of application: **11.05.83**
**Bulletin 83/19**

(84) Designated Contracting States: **DE FR GB NL**

(71) Applicant: **Hughes Aircraft Company, Centinela & Teale
Streets, Culver City California 90230 (US)**

(72) Inventor: **Borah, Thomas C., 102 N. 7th Str., Banning
California 92220 (US)**
Inventor: **Robusto, Paul F., 195 Foussat Road, Oceanside
California 92054 (US)**
Inventor: **Hamacher, John C., 1131 Eucalyptus Ave, Vista
California 92083 (US)**

(74) Representative: **Colgan, Stephen James et al,
CARPMAELS & RANSFORD 43 Bloomsbury Square,
London WC1A 2RA. (GB)**

(54) **Single layer absorptive anti-reflection coating for a laser-addressed liquid crystal light valve.**

(57) A laser addressed reflective mode liquid crystal light valve includes an anti-reflective coating of only a single layer of cermet which is vacuum deposited in a partial pressure of oxygen to produce a combination of chrome and chromium oxide, the single layer anti-reflection coating both absorbing light at a wavelength corresponding to a laser beam wavelength and reflecting all other wavelengths with a higher reflectance. Some advantages are that fabrication is made easier by the elimination of multiple layers in the anti-reflection coating while laser beam absorption is enhanced by the single layer anti-reflection coating without causing a corresponding decrease in image resolution.

0078604

# SINGLE LAYER ABSORPTIVE ANTI-REFLECTION COATING FOR A LASER-ADDRESSED LIQUID CRYSTAL LIGHT VALVE

## TECHNICAL FIELD

This invention is related to anti-reflective coatings useful for reflective mode laser-addressed liquid crystal light valves.

## BACKGROUND ART

Laser-addressed reflective mode liquid crystal light valves typically include a glass layer facing a laser on on one side, the other side of the glass layer having an overlying anti-reflective coating, a reflective coating deposited over the anti-reflective coating and a liquid crystal layer deposited over the reflective coating. A thinly focused laser beam addresses a spot in the liquid crystal layer by penetrating through the glass layer and the anti-reflective coating layer and impinging on a corresponding adjacent spot in the the reflective coating, wherein the laser beam is absorbed to generate heat. The heat causes a change in the optical properties of the addressed spot in the liquid crystal layer. A bright beam incident on the opposite side of the liquid crystal layer is reflected at the reflective layer and is modulated by the heat induced changes in the liquid crystal layer optical characteristics. A significant feature of this prior art liquid crystal light valve is that the reflective layer must perform two functions, namely the reflection of the bright beam and, simultaneously, the absorption of the laser beam to generate heat.

The reflective layer typically comprises aluminum which has a relatively high heat conductivity. Accordingly, the small spot in the aluminum reflective layer heated by the thinly focused laser beam actually spreads in time due to the thermal conductivity, thus reducing the resolution of the image written by the laser beam in the liquid crystal layer. One prior art solution to this problem is to reduce the thickness of the aluminum layer, which has the disadvantage that the absorption of the laser beam in the aluminum is significantly reduced, as is the reflectivity of the aluminum layer.

A significant problem in fabricating such prior art laser-addressed reflective mode liquid crystal light valves is that the anti-reflective coating (sandwiched between the glass substrate and the aluminum reflective layer) must be "tuned" so that reflection is minimized and transmission is maximized at the wavelength of the laser beam. It is also desirable, if ambient light is present, that the anti-reflective coating have a maximum reflectance (or coefficient of reflection) at wavelengths other than the wavelength of the laser beam in order to filter out ambient light. The difficulty in fabrication arises because such anti-reflective coatings comprise a plurality of dielectric layers, each layer having a different index of refraction, the thickness of each layer having to be precisely determined in accordance with the wavelength to be transmitted therethrough. It is exceedingly difficult to "tune" such a reflective coating because the thickness of each individual layer in the anti-reflective coating must be predetermined prior to manufacture. Specifically, the anti-reflective coating is typically deposited over the glass substrate and the aluminum reflective layer is deposited thereafter, so that it is not possible to match the anti-reflective coating with the reflective layer by monitoring reflectance during deposition of the anti-reflective coating. Accordingly, the presence of a plurality of dielectric layers in the anti-reflective coating has made manufacture a very difficult process.

## SUMMARY OF THE INVENTION

The invention is a single layer combination absorption and anti-reflection coating which replaces the anti-reflective coating of the prior art laser-addressed liquid crystal light valves. An advantage of the single layer is that it greatly reduces the difficulty of manufacturing and "tuning" the anti-reflective coating.

An advantage of the dual functions of anti-reflection and absorption performed by the single layer anti-reflection coating of this invention is that the anti-reflection coating itself performs the laser beam heat absorption which, in prior art light valves, was performed instead by the reflective coating. Accordingly, the laser beam absorption may be significantly improved without having to increase the thickness of the aluminum reflective layer (which would otherwise degrade image resolution). This invention not only reduces manufacturing costs by the elimination of multiple tuned anti-reflective layers but also improves performance by increasing the laser beam absorption. In the preferred embodiment of the invention, an additional chrome reflective layer is added and sandwiched between the aluminum reflective layer and the single layer anti-reflective coating.

## DESCRIPTION OF THE DRAWINGS

The invention is best understood by reference to the accompanying drawings, of which:

FIG. 1 is a simplified cross-sectional view of a portion of a laser-addressed reflective mode liquid crystal light valve;

BAD ORIGINAL

FIG. 2 is a simplified cross-sectional view of the single layer absorptive anti-reflection coating used in the light valve of FIG. 1, and illustrates laser beam absorption, reflection and transmission through the single layer anti-reflection coating; and

FIG. 3 is a cross-sectional view of a prior art anti-reflective coating layer.

## DETAILED DESCRIPTION OF THE INVENTION

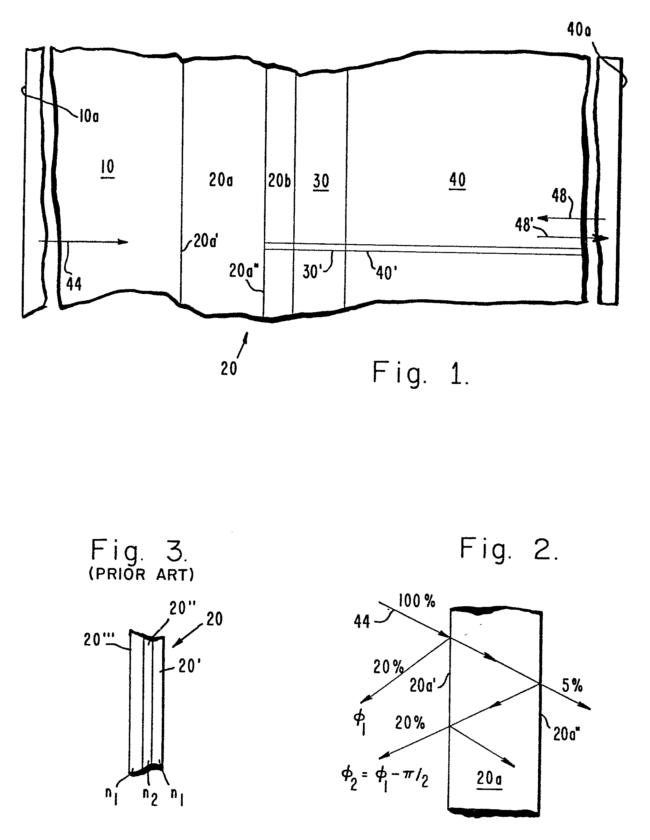

FIG. 1 illustrates in cross-sectional view a portion of a laser-addressed reflective mode liquid crystal light valve, including a glass substrate layer 10, an anti-reflective coating 20, an aluminum reflective layer 30 and a liquid crystal layer 40. A thinly focused laser beam 44 is directed toward front face 10a of the glass substrate 10 while a bright beam 48 of visible light is directed toward back face 40a of the liquid crystal layer 40. The bright beam 48 is reflected at the reflective layer 30 so that a return bright beam 48' emerges from the back face 40a of the liquid crystal layer 40 and is modulated by the laser beam 44. In the prior art, this modulation occurs because the reflective layer 30 absorbs a portion of the energy from the laser beam 44, converting it to heat, so that the thinly focused laser beam 44 heats a very small region 30' of the reflective layer 30 and an adjacent region 40' of the liquid cyrstal layer 40, which changes the optical response of the adjacent region 40' to the bright beam 48. For example, the heated portion 40' of the liquid crystal layer 40 may be extremely reflective to the bright beam 48 while the remaining region of the liquid layer 40 may completely absorb the bright beam 48.

The purpose of the anti-reflective coating 20 is to prevent reflection of the laser beam 44 by the reflective layer 30, so that the reflective layer 30 absorbs rather than reflects the laser beam 44. FIG. 3 illustrates a typical anti-reflective coating of the prior art including three layers 20', 20'' and 20''', each of the layers having indices of refraction $n_1$, $n_2$ and $n_1$ respectively, their thicknesses being precisely determined in order to assure maximum transmission to the reflective layer 30 of light of a wavelength corresponding to that of the laser beam 44.

Significantly, prior art laser-addressed light valves using a multi-layer anti-reflective coating 20 of the type illustrated in FIG. 3 are very difficult to fabricate. Specifically, the glass substrate 10 is formed first during manufacture, the anti-reflective coating 20 being deposited over the glass substrate and the anti-reflective coating 30 being deposited over the anti-reflective coating at a later time. Consequently, the multiple layers 20', 20'' and 20''' cannot be monitored during formation for their effect on the reflection of the laser beam by the reflective coating 30. Instead the thickness of each of the layers 20', 20'', 20''' must be predetermined. The presence of multiple anti-reflective layers 20', 20'' and 20''' makes the preselection of layer thickness, or "tuning" of the anti-reflective coating 20, difficult and expensive in proportion to the number of layers, a significant disadvantage.

Another disadvantage of such prior art laser addressed light valves is that the aluminum reflective layer 30 performs the laser beam absorption. Consequently, there exists a tradeoff between image resolution and laser beam absorption. Specifically, as the thickness of the aluminum reflective coating 30 is increased, the amount of energy absorbed from the laser beam 44 is proportionally increased (an advantage) while the lateral spread of heat (and of the heated region 30') also increases, due to the high thermal conductivity of the aluminum material in the reflective layer 30. This lateral spreading reduces the resolution of the image produced by the heated portion 40' of the liquid crystal layer 40, a significant disadvantage. On the other hand, if the thickness of the reflective layer 30 is reduced, the image resolution is increased but the laser absorption is decreased.

These problems are overcome in the present invention by the provision of a single layer absorptive anti-reflection coating 20a illustrated in FIG. 2, preferably comprising cermet material, which is a mixture of chromium (Cr) and chromium oxide ($Cr_2O_3$). The single layer 20a of FIG. 2 replaces the multi-layer coating of FIG. 3 and performs dual functions of both anti-reflection and laser beam thermal absorption. One advantage of the single layer of FIG. 2 is that fabrication and "tuning" is made significantly easier because there is only one layer. The advantage of the dual functions of absorption and anti-reflection of the single layer 20a is that reduction in thickness of the highly conductive aluminum reflective layer 30 (in order to improve image resolution) does not degrade absorption, since the laser beam absorption is performed by the dual-function anti-reflection coating layer 20a.

In the preferred embodiment of the invention, a chrome layer 20b illustrated in FIG. 1 is sandwiched between the single layer anti-reflection coating 20a and the aluminum reflective coating 30.

FIG. 2 illustrates an example of the operation of the single layer anti-reflective coating of the present invention. The laser beam 44 is incident on front face 20a' of the single layer anti-reflection coating 20a. In this example, 20 percent of the incident beam is reflected at the front face 20a' to generate a primary reflected beam of phase $\emptyset_1$, as indicated in FIG. 2. The remaining 80 percent of the beam 44 penetrates the interior of the single layer 20a. Some of the penetrating beam is absorbed as it travels between the front face 20a' and back face 20a'' so that only part of it reaches the back face 20a''. In this example, it may also be assumed that approximately 5 percent of the beam is transmitted through the back face 20a'', the remaining portion being reflected back through the interior of the single layer 20a. Again, some of the beam is absorbed as it travels between the back face 20a'' and the front face 20a' so that an even smaller portion of the beam now reaches the frontface 20a'. An amount corresponding to 20 percent of the original beam is then transmitted through the front face 20a' to generate a secondary reflected beam having a phase $\phi_2 = \phi_1 - \pi/2$. The thickness of the single layer anti-reflective coating 20a is selected to achieve the foregoing relationship between the phases $\phi_1$ and $\phi_2$ of the primary and secondary reflected beams, respectively. It should be understood, of course, that the percentages of reflection, transmission and absorption given in the foregoing example are arbitrary and were given only for the purpose of conceptually illustrating the operation of the single layer absorptive anti-reflection coating of the invention.

In general, the primary and secondary reflected beams are of the same magnitude but of opposite phase, so that total destructive interference between the two reflected beams occurs at the front face 20a', and there is, theoretically, no reflection at the front face 20a'. In actual practise, however, about 4% of the laser beam is reflected or lost, the remaining 96% of the beam being absorbed in the absorptive anti-reflection coating. Of course, this condition obtains only for a laser beam having a wavelength within the range to which the thickness of the layer 20a is "tuned". Other wavelengths of light are nearly completely reflected at the front face 20a'.

Fabrication of the single layer absorptive anti-reflection coating 20a of FIG. 2 is accomplished by depositing chromium metal over the glass substrate 10 in the presence of oxygen and varying the deposition rate to control the degree of oxidation. Experimentally, the evaporation rate, or deposition rate, is tested to determine the rate needed to achieve the desired optical properties.

THEORY OF OPERATION

The optical constants for pure chromium are N = 3.2, K = 3.8 and for chrome oxide ($CR_2O_3$) are N = 2.1 and K = .06, these constants being applicable at a wavelength of 850 nanometers. The constants N and K are the well-known complex wave numbers used in the plane wave formulation of Maxwell's equations to solve for the coefficients of reflection, transmission and absorption at boundaries between two dissimilar optical materials. For example, the plane wave coefficient of reflection at the interface between a vacuum and a material having optical constants N and K is given by $R^2 = ((N-1)^2 + K^2)/((N+1)^2 + K^2)$.

The coefficients of reflection, transmission and absorbtion of the cermet layer 20a determine the percentages of reflection, transmission and absorption which were given arbitrarily in the example of FIG. 2. By varying the deposition rate and partial pressure of oxygen to vary the degree of oxidation, the proportion of chrome oxide and chromium in the cermet layer 20a may be varied in order to achieve intermediate optical constants somewhere between the optical constants of chrome and the optical constants of chrome oxide stated above. The constants are thus selected so that the layer 20a has a minimum coefficient of reflection and a maximum coefficient of absorbtion at the wavelength of the laser.

Example 1.

A reflective mode laser-addressed liquid crystal light valve for use with a laser beam of wavelength 850 nanometers was constructed wherein the glass layer 10 comprised silicon dioxide, the single layer absorptive anti-reflection coating 20a comprised cermet, the coating 20a was 43 nanometers in thickness, the intermediate chrome layer 20b was 32 nanometers in thickness and the aluminum reflection layer 30 was 15 nanometers in thickness. The cermet coating 20a was formed by vapor deposition of chromium metal over the glass substrate 10 in a pressure of $1\times10^{-4}$ torr at a deposition rate of $430\overset{\circ}{A}/21.4$ minutes in an atmosphere of 50% oxygen and 50% argon (Ar) wherein the glass substrate 10 was at a temperature of 120°C. It was observed that the resulting structure had 96 percent absorption of light at a wavelength of 850 nanometers and a reflectance of 87 percent of light at a wavelength of 6328 nanometers. This is the presently preferred embodiment of the invention, although it is contemplated that a skilled worker may make other embodiments of the invention not expressly described herein.

Example 2.

In an alternative embodiment of the invention, the chromium layer 20b is eliminated, the anti-reflective coating 20a directly contacting the reflective aluminum coating 30. This alternative embodiment was constructed, and the cermet layer 20a was formed by the vapor deposition of chromium onto the glass substrate 10 at a deposition rate of $430\overset{\circ}{A}/26$ minutes at a pressure of $10^{-4}$ torr in an atmosphere of 50% $O_2$ and 50% Ar wherein the glass substrate 10 was at a temperature of 120°C. The thickness of the cermet anti-reflection layer 20a was 43 nanometers and the thickness of the aluminum reflection layer 30 was 15 nanometers. The resulting structure had an absorption of 94 percent of light at a wavelength of

0078604

850 nanometers and a reflectance of 87 percent of light at a wavelength of 6328 nanometers.

CLAIMS

What is Claimed is:

1. A light valve comprising:

a glass substrate;

a single layer light absorptive anti-reflection coating overlying said substrate;

a light reflective coating overlying said anti-reflection coating; and

a birefringent material overlying said reflective layer.

2. The light valve of Claim 1 wherein said single layer absorptive anti-reflection coating comprises a combination of two materials, each material characterized by a different pair of optical constants N and K.

3. The light valve of Claim 2 wherein said coating is characterized by a thickness, and wherein the proportion of said two materials of said combination and said thickness are such that said coating has a maximum absorbtion and a minimum reflectance at a particular selected wavelength of light.

4. The light valve of Claim 3 wherein said single layer absorptive anti-reflection coating comprises a combination of chromium and chromium oxide.

5. The light valve of Claim 4 further comprising an additional layer of chrome sandwiched between said single layer absorptive anti-reflection coating and said reflective coating and wherein said reflective coating comprises a thin layer of aluminum.

12 | Claim(s) Nr 1-7 ~~deemed~~ ~~to be~~ abandoned

6. The light valve of Claim 5 wherein said birefringent material comprises a liquid crystal layer.

7. The light valve of Claim 6 wherein said single layer absorptive anti-reflection coating comprises chromium vacuum deposited over said substrate in the presence of oxygen.

8. A reflective mode laser-addressed liquid crystal light valve comprising:
a transparent substrate having a front face and a back face, said front face disposed to receive a laser beam;
a single layer absorptive anti-reflection coating formed over said back face;
a reflective coating formed over said single layer absorptive anti-reflection coating; and
a liquid crystal layer having a front face and a back face, the front face of said liquid crystal layer facing said reflective layer and the back face of said liquid crystal layer being disposed to receive a bright beam.

9. The light valve of Claim 8 wherein said single layer absorptive anti-reflection coating comprises a combination of two materials, each characterized by a different pair of optical constants N and K, said combination characterized by a corresponding pair of optical constants intermediate between the optical constant pairs of said two materials.

10. The light valve of Claim 9 wherein said single layer absorptive anti-reflection coating comprises a cermet layer formed during the vacuum deposition of chromium over said substrate in the presence of oxygen.

11. The light valve of Claim 10 wherein chromium and chromium oxide are present in said coating in a particular proportion wherein absorption of light at a selected wavelength is maximized in said single layer absorptive anti-reflection coating.

12. A method of fabricating a light valve comprising:
forming a glass substrate;
vacuum depositing chromium metal to form a single layer absorptive anti-reflection coating over said glass substrate in an atmosphere comprising oxygen at a selected rate of deposition and at a selected pressure;
forming a reflective layer over said single layer coating; and
forming a liquid crystal layer over said reflective layer.

13. The method of Claim 12 further comprising depositing a chromium layer over said single layer coating before said reflective layer forming step.

14. The method of Claim 13 wherein said atmosphere comprises 50%, oxygen said pressure is on the order of $1 \times 10^{-4}$ torr and said deposition rate is on the order of 20Å per minute.

15. A method for making a light valve to be addressed by a laser having a single layer absorptive anti-reflection coating, comprising:
forming a substrate;

forming a single layer absorptive anti-reflection coating over said substrate by combining two different materials characterized by different pairs of optical constants N and K;

forming a reflection layer over said anti-reflective coating; and

forming a layer comprising a birefringent material over said reflective layer.

16. The method of Claim 15 wherein said absorptive anti-reflection coating forming step comprises vacuum depositing chromium over said substrate in a partial pressure of oxygen at a selected evaporation rate.

17. The method of Claim 16 is wherein said forming step sets the thickness of said coating, and wherein said combining step sets the optical constants of said coating to be intermediate between the optical constants of said two materials, said thickness and said intermediate optical constants being such that said coating has a low reflectance and a high absorption of light at the wavelength of said laser.

18. The method of Claim 16 wherein said evaporation rate and said oxygen partial pressure are selected so the absorption of said single layer anti-reflection coating is maximum at a particular wavelength of light incident on said substrate.

0078604

1/1

Fig. 1.

Fig. 3.
(PRIOR ART)

Fig. 2.